(19) Europäisches Patentamt
European Patent Office
Office européen des brevets

(11) EP 1 264 801 A2

(12) # EUROPEAN PATENT APPLICATION

(43) Date of publication:
**11.12.2002 Bulletin 2002/50**

(51) Int Cl.[7]: **C02F 1/58**, C02F 1/70

(21) Application number: **02012069.7**

(22) Date of filing: **31.05.2002**

(84) Designated Contracting States:
**AT BE CH CY DE DK ES FI FR GB GR IE IT LI LU MC NL PT SE TR**
Designated Extension States:
**AL LT LV MK RO SI**

(30) Priority: **07.06.2001 SE 0101996**

(71) Applicant: **Feralco AB**
**252 32 Helsingborg (SE)**

(72) Inventors:
- **Jäfverström, Stefan**
  **602 34 Norrköping (SE)**
- **Clarke, Neil**
  **Thelwall, Warrington, Cheshire, WA4 2JR (GB)**

(74) Representative: **Inger, Lars Ulf Bosson et al**
**Ström & Gulliksson IP AB**
**Sjöporten 4**
**417 64 Göteborg (SE)**

(54) **Reduction process**

(57) In a method of purifying an aqueous solution contaminated by an aluminium salt and salts of less noble metals, an alkali is first added to the aqueous solution followed by adding metallic aluminium. This results in the precipitation of aluminium as well as the less noble metals, which are subsequently removed.

EP 1 264 801 A2

## Description

Technical field

The invention relates to a method of purifying an aqueous solution contaminated by aluminium and less noble metals. More precisely, the invention relates to a method of precipitating heavy metals with aluminium from an aqueous solution thereof, whereby the pH of the solution is raised.

In the aluminium finishing industry, by-products are obtained from the surface treatment of aluminium. Representative examples are sludges of mainly aluminium hydroxide, waste sulphuric acids from the removal of coatings in the surface treatment, and aqueous sulphuric acid solutions of aluminium sulphate from the recovery of sulphuric acid in the surface treatment. Spent aluminic catalysts are likewise obtained as aluminium hydroxide and aluminium chloride from the oil cracking industry. Other industries also produce aluminic waste materials, which can leach and pollute the environment. For example, electronic scrap comprises ferrous and non-ferrous metals. These metals include copper, aluminium, iron, nickel, tin, and zinc, as well as small amounts of gold and silver.

The further processing and use of aluminium, such as electroplating, also produces polluted waste streams. In the production of silicon, the impurities are leached from a silicon ore, whereby a solution is produced which contains iron and aluminium as impurities. Iron is removed by means of a process which results in a polluted aluminium chloride solution.

When these materials are to be disposed, a major limiting factor on the application of industrial sludge to agricultural land is the presence of heavy metals. Even in sludges from non-industrial regions problems can arise from zinc, copper, lead, and cadmium. Thus, the disposal of metal-finishing wastes and toxic sludges is a major environmental problem.

Furthermore, many countries of the world today are facing problems of shorter life expectancy and higher mortality rates, which to a great extent is caused by use of low quality drinking water. This problem can be traced back to natural water sources, which often are contaminated by heavy metals.

Aluminium sulphate is an important component in connection with the purification of drinking water, and the limits for this compound are set with reference to the concentration of heavy metals. This is especially important when waters are required, which must meet food standards. In this connection, chromium can constitute a serious problem if a pure raw material is not used in a purification procedure.

Often, a polymeric flocculant is used in order to remove from the polluted water such metals as copper, chromium, cobalt, lead, iron, indium, nickel, cadmium, manganese, zinc, molybdenum, bismuth, and vanadium. Complexes called polyaluminium chloride (PAC) are among the commercial products used for such treatments of water. In certain wastewater treatment plants aluminium sulfate is used as a flocculent, whereby a heavy metal containing floc is also formed for removal.

However, a component added to a drinking water must not contribute with a metal content of more than 1/10 of the maximum amount allowed in drinking water. This can create serious problems, since both iron and aluminium are common components in drinking water.

Thus, there is a need of a technology for treating aqueous effluents of different origin, which contain heavy metals, whereby heavy polluted streams from processed industrial aluminium wastes as well as less polluted waters contaminated by heavy metals can be purified efficiently and at low costs.

The purpose of the invention is to eliminate or reduce the drawbacks mentioned above by providing a method of precipitating a more noble metal with a less noble metal by means of a redox reaction, whereby non-desired reactions are blocked.

In order to achieve this purpose the method according to the invention has obtained the characterizing features of claim 1.

The invention is based on a reduction reaction that is performed according to known principles with a less noble metal than the impurities to be treated, the less noble metal being aluminium.

Two reactions are exemplified:

$$3Cu^{2+} + 2Al \rightarrow 3Cu + 2Al^{3+}$$

$$1Fe^{3+} + 1Al \rightarrow 1Fe + 1Al^{3+}$$

The more noble metal impurities, such as iron, chromium, nickel, cobalt, copper, and manganese, are reduced from their ionic form to their metallic form. However, ions of more toxic metals, such as zinc, lead, cadmium, mercury, vanadium, and nickel ions, are also reduced in the inventive method. These impurities are subsequently removed in

the form of metals. This is performed by means of filtration and/or centrifugation.

The amount of metallic aluminium required in order to accomplish the reduction reaction, of course, depends on the concentrations the more noble impurities as metal salts. The reaction time must also be taken into consideration, i.e. the longer reaction the more metallic aluminium is consumed. Furthermore, the higher oxidation state of the impurity, the more metallic aluminium is consumed in order to accomplish the reduction reaction. Theoretically, 1 mole of an impurity having a valence number of 3 requires 1 mole of aluminium, 1 mole of an impurity having a valence number of 2 requires 2/3 mole of aluminium, and 1 mole of an impurity having a valence number of 1 requires 1/3 mole of aluminium. Preferably, the double amounts of the theoretical values are used in order to guarantee a complete reduction reaction.

However, a problem with a reduction process is unwanted reactions, the main reaction of which being the reduction of hydrogen ions to an explosive hydrogen gas. This reaction takes place instead of the desired reduction of metals:

$$6H^+ + 2Al \rightarrow 3H_2 + 2Al^{3+}$$

Furthermore, this problem becomes aggravated in a metal chloride solution, which is due to the low pH obtained by the high concentration of hydrogen ions.

Since aluminium chloride is a commercial product of interest, water will always be hydrolyzed and create problems. The inventive method is especially adapted to the reduction of metals in a partly alkalized aluminium chloride solution.

In addition, the extreme property of the aluminium ion to form polymer complexes makes it a natural end product in an undesired hydrolysis, hydrogen ions also being formed.

According to the invention, conditions are created which reduce the influence of the hydrogen ions. This is accomplished by performing the method according to the invention in two successive steps:

1. Alkalization: $4Al^{3+} + Me^{3+} + 7OH^- \rightarrow Al_4(OH)_7{}^{5+} + Me^{3+}$
2. Reduction: $Al_4(OH)_7{}^{5+} + Me^{3+} + Al \rightarrow Al_5(OH)_7{}^{8+} + Me$

In an aluminium chloride solution with metallic aluminium, the aluminium chloride is so aggressive that it will attack the metallic aluminium before all the heavy metals have been completely reduced. This problem is especially important with chromium.

In this connection, it should be emphasized that it is considered extremely difficult to separate chromium from aluminium. These two metals have many similar properties and they appear often together in their ionic forms in wastewaters contaminated by aluminium as well as heavy metals and other less noble metals. For example, in a water contaminated by aluminium, iron, chromium, nickel as their chloride salts, an addition of metallic aluminium would only reduce some of the less noble metals, the aluminium being oxidized and solubilized.

The problem in connection with such redox reactions in an aqueous solution of metal salts is that all the metals will hydrolyze water, an aquatic complex being formed.

$$Me^{2+} + 6H_2O \rightarrow Me(OH)^{\cdot}(H_2O)_5 + H^+$$

The production of hydrogen ions will increase the acidity of the solution, pH being decreased.

Thus, despite of the fact that the solution initially is not acidic and does not contain any hydrogen ions, the metals therein will create unfavorable conditions from the hydrolysis.

The surplus of hydrogen ions explains the generation of the redox reaction:

$$2H^+ + 2e^- \rightarrow \quad H_2 \quad 0.000\ V,$$

with the formation of large amounts of explosive hydrogen.

Furthermore, intended redox reactions of less noble metals are inhibited, for example:

$$Ni^{2+} + 2\ e^- = Ni \quad -0.246\ V$$

$$Fe^{2+} + 2e^- = Fe \qquad -0.440\ V$$

$$Cr^{3+} + 3e^- = Cr \qquad -0.740\ V$$

Apart from the formation of large amounts of hydrogen ions, the rates of the reduction of nickel, ferro, and chromium ions will be prevented when metallic aluminium is used in the redox reaction, as seen from the relative redox potentials.

In an aqueous aluminium solution contaminated by less noble metals the pH and the amounts of hydrogen ions are according to the invention changed in such a way that conditions are obtained so that the desired reduction reactions of the less noble metal ions to take place.

By increasing the pH of the solution, the hydrolysis of water is prevented. This means that a sufficient amount of protons are not available for the consumption of the aluminium metal. As a consequence, there is time for the chromium ions to react by the competition between protons and heavy metal ions being prevented.

Representative heavy metals, which exhibit biological toxicity when released into the environment, include copper, zinc, nickel, tin, lead, cadmium, cobalt, mercury, chromium, manganese, silver, gold, platinum, palladium, vanadium, arsenic, antimony, bismuth, indium, rhodium, ruthenium, technetium, molybdenum, nobium, osmium, iridium, uranium, plutionium, lanthanides, actinides, and mixtures thereof. Metal ions, which are especially suitable to be purified from a polluted aqueous aluminium solution by means of the method according to the invention, are ions of silver, mercury, copper, lead, tin, molybdenum, nickel, cadmium, iron, zinc, chromium, manganese, and zirconium.

By performing the inventive method in the specified order, the formation of hydrogen ions, and thus the formation of hydrogen gas, is avoided.

This is accomplished by adding an alkali to the aqueous aluminium solution, the solution being alkalized and the less noble metal ions being reduced before the aluminium is consumed. Furthermore, by the addition of an alkali, e.g. magnesium hydroxide, complex aluminium hydroxychloride compounds are formed from the material treated by means of the method according to the invention:

$$2AlCl_3 + 1Mg(OH)_2 \rightarrow Al_2(OH)_2Cl_4 + MgCl_2$$

Examples of suitable alkalis in the inventive method are magnesium hydroxide, magnesium carbonate, magnesium oxide, magnesium hydroxide, magnesium carbonate, magnesium oxide, aluminium hydroxide, aluminium oxide, metallic aluminium, sodium hydroxide, sodium carbonate, sodium aluminate, potassium hydroxide, potassium carbonate, potassium oxide, potassium aluminate, potassium magnesium carbonate, and mixtures thereof.

By binding the aluminium of the treated solution to a polymerized basic soluble form, the spontaneous hydrolysis of water is prevented, which otherwise would take place with a free aluminium ion. In addition, by preventing the hydrolysis of water, the concentration of hydrogen ions in the solution is decreased. Thus, conditions are created so that a reduction reaction can be accomplished without a serious perturbation which otherwise should take place with a hydrolyzed water solution with aluminium.

In conclusion, the reactions to be avoided with for example chromium as a less noble metal is:

$$3Al^{3+} + 3H_2O + Cr^{3+} + Al \rightarrow 3Al(OH)^{2+} + 3H^+ + Cr^{3+} + Al$$

$$\rightarrow 3Al(OH)^{2+} + Cr^{3+} + Al^{3+} + 1.5\ H_2$$

According to the invention, the following reactions will take place instead:

$$2Al^{3+} + 2H_2O + Cr^{3+} + Mg(OH)_2$$

$$\rightarrow 2Al(OH)^{2+} + 2H_2O + Cr^{3+} + Mg^{2+} + Al$$

$$\rightarrow 2Al(OH)^{2+} + 2H_2O + Cr + Al^{3+} + Mg^{2+}$$

As seen from the reaction scheme, in a solution comprising ions of aluminium, nickel, chromium, copper and ion, the aluminium ion has the largest capacity of hydrolyzing water, hydrogen ions being generated which block an

effective purification. Thus, by adding an alkali to the solution, e.g. magnesium hydroxide, the aluminium ions will become less aggressive, whereby also chromium is reduced.

Furthermore, aluminium ions form large complexes or polymeric compounds by means of hydroxide bridges between the aluminium ions in a polluted water solution that is treated with method according to the invention, such as:

$2Al^{3+} + 2OH^{-} \rightarrow$ 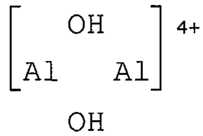

Thus, by adding an alkali to a polluted aluminium solution, large complexes of polymeric aluminium compounds are obtained, such as:

$$Al_4(OH)_7{}^{5+} \text{ or } Al_{13}O_4(OH)_{24}{}^{7+}$$

The inherent formation of polymeric aluminium compounds in the inventive method results in that the impurities in the form of metals can be effectively removed from the water solution.

Of course, the inventive method is also adapted to a polluted aqueous solution with suspended material therein.

EXAMPLES

Example 1.

An aluminium chloride solution (6% Al) contaminated by chromium ions (100 mg/l) was processed by means of the inventive method.

An alkali, in this case magnesium hydroxide, was added to the aluminium chloride solution in a molar ratio magnesium hydroxide/aluminium ions of 0.75. Then metallic aluminium was added in a molar ratio metallic aluminium/ chromium ions of 10.

The formation of hydrogen gas was drastically reduced in comparison with the reaction without any alkali

$$Al + Cr^{3+} + 3H^{+} = Al^{3+} + Cr^{3+} + 1.5\ H_2$$

As a result, the chromium ions could react with a metallic aluminium, the amount of chromium in the solution being reduced from 100 mg/l to 10 mg/l (90%).

Thus, a useless aluminium chloride solution could be purified to a commercially attractive product with the method according to the invention.

## Claims

1. A method of purifying an aqueous solution contaminated by an aluminium salt and salts of less noble metals, **characterized in that** the method includes the following order of steps
   adding an alkali to said aqueous solution;
   forming an aluminium hydroxychloride solution reducing solubility of aluminium chloride;
   adding metallic aluminium, said aluminium as well as said less noble metals being reduced from their ionic to their metallic form and precipitated; and
   separating said precipitated metals from said aqueous solution.

2. Method as in claim 1, **characterized in that** said aluminium salt is aluminium chloride.

3. Method as in claim 1 or 2, **characterized in that** said alkali is selected from the group comprising magnesium hydroxide, magnesium carbonate, magnesium oxide, magnesium hydroxide, magnesium carbonate, magnesium

oxide, aluminium hydroxide, aluminium oxide, metallic aluminium, sodium hydroxide, sodium carbonate, sodium aluminate, potassium hydroxide, potassium carbonate, potassium oxide, potassium aluminate, potassium magnesium carbonate, and mixtures thereof.

4. Method as in claim 1, **characterized in that** said separation is performed by means of filtration and/or centrifugation.